# EUROPÄISCHE PATENTSCHRIFT

(11) **EP 2 996 910 B1**
(45) Veröffentlichungstag und Bekanntmachung des Hinweises auf die Patenterteilung: **27.02.2019**
(21) Anmeldenummer: 14720989.4
(22) Anmeldetag: 05.05.2014
(51) Int. Cl.: B60S 1/38, B60S 1/40, B60S 1/52

(54) **WISCHARM FÜR EINE SCHEIBENWISCHANLAGE EINES KRAFTFAHRZEUGS, WISCHBLATT SOWIE WISCHVORRICHTUNG**
WIPER ARM FOR A WINDSCREEN WIPER SYSTEM OF A MOTOR VEHICLE, WIPER FRAME AND WIPING DEVICE
BRAS D'ESSUIE-GLACE POUR SYSTÈME D'ESSUIE-GLACE D'UN VÉHICULE AUTOMOBILE, RACLETTE D'ESSUIE-GLACE ET DISPOSITIF DE LAVAGE

(30) Priorität: 13.05.2013 DE 102013104900
(43) Veröffentlichungstag der Anmeldung: 23.03.2016
(73) Patentinhaber: Valeo Systèmes d'Essuyage, 78322 Le Mesnil Saint Denis (FR)
(72) Erfinder: SCHAEUBLE, Michael, 71665 Vaihingen an der Enz (DE)
(74) Vertreter: Callu-Danseux, Violaine
(86) Internationale Anmeldenummer: PCT/EP2014/059136
(87) Internationale Veröffentlichungsnummer: WO 2014/184036

(56) Entgegenhaltungen:
- DE-A1-102010 047 098
- DE-A1-102010 049 740
- DE-A1-102010 052 314
- DE-A1-102011 001 689
- FR-A1- 2 968 256

## Beschreibung

### Stand der Technik

Die Erfindung betrifft einen Wischarm für eine Scheibenwischanlage eines Kraftfahrzeugs nach dem Oberbegriff des Anspruchs 1. Ferner betrifft die Erfindung ein Wischblatt, insbesondere zur Befestigung an einem erfindungsgemäßen Wischarm sowie eine Wischvorrichtung, bestehend aus einem erfindungsgemäßen Wischarm und einem erfindungsgemäßen Wischblatt.

Ein Wischarm nach dem Oberbegriff des Anspruchs 1 ist bereits bekannt. Er weist ein mit dem Wischarm verbundenes, schieberartiges Sicherungselement auf, das zum Halten eines Wischblattadapters in einem Aufnahmebereich des Wischarms dient. Darüber hinaus ist in dem Wischarm ein Adapterelement zur Zuführung von Waschflüssigkeit vorgesehen, das bei der Montage bzw. Demontage eines Wischblatts eine hydraulische Verbindung zum Wischblatt ausbildet.

Weiterhin ist aus der DE 10 2011 118 220 A1 ein Wischarm bekannt, der in einem Aufnahmebereich für einen Wischblattadapter eines Wischblatts einen U-förmigen Querschnitt aufweist. Auf der dem Wischblattadapter zugewandten Seite sind an den Seitenwänden des Aufnahmebereichs, ausgehend von jeweils einer unteren Begrenzungskante der Seitenwand, Aufnahmeöffnungen für an dem Wischblattadapter angeordnete Vorsprünge ausgebildet. Darüber hinaus ist der Aufnahmebereich des Wischarms von einem ebenfalls im Wesentlichen einen U-förmigen Querschnitt aufweisenden Sicherungselement überdeckt, das zwischen einer Montage- bzw. Demontagestellung für das Wischblatt und einer Betriebsstellung für das Wischblatt, in der das Wischblatt an dem Wischarm gesichert ist, verschiebbar angeordnet ist. Die Montage bzw. Demontage des Wischblatts am Wischarm erfolgt im Wesentlichen senkrecht zur Erstreckung des Wischblatts bzw. des Wischarms.

Darüber hinaus sind aus dem Stand der Technik sogenannte "Aqua-Blade"-Wischblätter bekannt, bei denen eine Waschflüssigkeit zu an den Längsseiten des Wischblatts ausgebildeten Sprühöffnungen geführt wird. Die Versorgung des Wischblatts mit der Waschflüssigkeit erfolgt dabei üblicherweise über eine innerhalb des Wischarms geführte Versorgungsleitung in Form eines flexiblen Schlauchs. Der Schlauch ist hydraulisch zumindest mittelbar mit dem Wischblattadapter verbunden. Wesentlich dabei ist, dass die aus dem Stand der Technik bekannten Verbindungen dabei üblicherweise in Längsrichtung des Wischarms erfolgen, so dass derartige Verbindungen nicht dazu geeignet sind, bei dem eingangs erwähnten Wischarm gemäß der DE 10 2011 118 220 A1 bei einer Montage- bzw. Demontage des Wischblatts gleichzeitig und ohne zusätzlichen manuellen Aufwand die hydraulische Versorgung des Wischblatts mit Waschflüssigkeit sicherzustellen. DE-A-102010052314 offenbart die Oberbegriffe der Ansprüche 1 und 6.

### Offenbarung der Erfindung

Ausgehend von dem dargestellten Stand der Technik liegt der Erfindung die Aufgabe zugrunde, einen Wischarm für eine Scheibenwischanlage eines Kraftfahrzeugs nach dem Oberbegriff des Anspruchs 1 derart weiterzubilden, dass dieser dazu geeignet ist, bei relativ einfacher Montage sowohl eine hydraulische bzw. elektrische Verbindung zwischen einem Wischblatt und einem Wischarm über das Adapterelement herzustellen, und wobei gleichzeitig die hydraulische bzw. elektrischen Ankopplung bzw. Trennung des Wischblatts vom Adapterelement im Wischarm getrennt sein soll von der eigentlichen Montage- bzw. Demontagerichtung des Wischblatts am Wischarm. Diese Aufgabe wird erfindungsgemäß bei einem Wischarm für eine Scheibenwischanlage eines Kraftfahrzeugs mit den Merkmalen des Anspruchs 1 dadurch gelöst, dass das mit dem Adapterelement verbindbare erste Wischblattadapterelement mit dem Sicherungselement gekoppelt ist, derart, dass entsprechend der Stellung des Sicherungselements in der Sperrstellung das Adapterelement mit dem ersten Wischblattadapterelement verbunden und in der Demontagestellung das Adapterelement vom ersten Wischblattadapterelement getrennt ist.

Mit anderen Worten gesagt wird durch eine Kopplung des Sicherungselements mit einem Wischblattadapterelement über eine Bewegung des Sicherungselements gleichzeitig die hydraulische bzw. elektrische Ankopplung des Wischblatts an das Adapterelement im Wischarm realisiert. Bei einer Demontage wird somit zunächst durch eine entsprechende Bewegung des Sicherungselements die hydraulische bzw. elektrische Verbindung des Wischblatts vom Adapterelement im Wischarm gelöst, und anschließend wird das Wischblatt durch eine entsprechende Bewegung am Wischarm aus dem Aufnahmebereich des Wischarms herausgezogen. In analoger Weise erfolgt die Montage eines Wischblatts an einem erfindungsgemäßen Wischarm dadurch, dass das Wischblatt zunächst in den Aufnahmebereich des Wischarms eingeführt wird, und dass anschließend durch eine entsprechende Bewegung des Sicherungselements das Wischblattadapterelement des Wischblatts einerseits die hydraulische bzw. elektrische Ankopplung des Wischblatts an das Adapterelement im Wischarm ermöglicht und andererseits den Wischarm in der Aufnahmeöffnung des Wischarms blockiert.

Vorteilhafte Weiterbildungen des erfindungsgemäßen Wischarms für eine Scheibenwischanlage eines Kraftfahrzeugs sind in den Unteransprüchen aufgeführt.

Besonders bevorzugt ist eine konstruktive Ausbildung, bei der die Kopplung des Sicherungselements mit dem ersten Wischblattadapterelement über eine Formschlussverbindung erfolgt, die einen Vorsprung am Sicherungselement oder am ersten Wischblattadapterelement aufweist, der in eine Öffnung am ersten Wischblattadapterelement oder am Sicherungselement eingreift. Eine derartige Ausbildung ermöglicht es, durch Einführen des Vorsprungs in die Öffnung auf besonders einfache Art und Weise den Wischblattadapter mit dem Sicherungselement in gewünschter Art und Weise zu verbinden bzw. zu koppeln. Ebenso findet eine besonders einfache Trennung der beiden Elemente durch Herausführen des Vorsprungs aus der Öffnung statt.

Insbesondere ist es vorgesehen, dass der Auslass und/oder der Steckeranschluss mit der Betätigungsrichtung des Sicherungselements ausgerichtet ist.

Die Erfindung umfasst auch ein Wischblatt zur Befestigung an einem erfindungsgemäßen Wischarm, wobei das Wischblatt einen aus mehreren Wischblattadapterelementen bestehenden Wischblattadapter umfasst, der dazu ausgebildet ist, in einem Wischarm aufgenommen zu werden, wobei die Montage- bzw. Demontagerichtung des Wischblattadapters am bzw. vom Wischarm im Wesentlichen senkrecht zur Wischblattlängsachse verläuft. Erfindungsgemäß ist es vorgesehen, dass an einem ersten Wischblattadapterelement des Wischblattadapters ein Einlass zur Zuführung einer Waschflüssigkeit und/oder ein Anschlusselement zur Stromzuführung ausgebildet ist, und dass der Einlass und/oder das Anschlusselement senkrecht zur Montage- bzw. Demontagerichtung des Wischblattadapters am Wischarm ausgerichtet ist.

In konstruktiv besonders bevorzugter Ausgestaltung des Wischblattadapters ist es vorgesehen, dass dieser wenigstens drei Wischblattadapterelemente aufweist, dem ersten Wischblattadapterelement, dass dazu ausgebildet ist, mit einem Adapterelement am Wischarm verbunden zu werden, einem zweiten Wischblattadapterelement, an dessen Seitenwände Fortsätze zum Einführen in Aufnahmeöffnungen eines Wischarms ausgebildet sind, und einem dritten Wischblattadapterelement, dass mit dem Wischblattkörper verbunden ist.

Um einerseits die benötigte Schwenkbarkeit des Wischblatts am Wischarm zu ermöglichen, und andererseits die gewünschte Kopplung des Sicherungselements mit dem Wischblattadapterelement zu realisieren, ist es besonders bevorzugt vorgesehen, wenn das zweite und das dritte Wischblattadapterelement schwenkbar zueinander angeordnet sind, und wenn das erste Wischblattadapterelement schwenkbar zum dritten Wischblattadapterelement und translatorisch beweglich zum zweiten Wischblattadapterelement angeordnet ist.

Zur Erzielung der Schwenkbarkeit zwischen dem ersten und dem dritten Wischblattadapterelement ist es konstruktiv vorgesehen, dass das erste Wischblattadapterelement erste Fortsätze aufweist, die zur Erzielung der Schwenkbarkeit zwischen dem ersten und dem dritten Wischblattadapterelement in Aussparungen des dritten Wischblattadapterelements eingreifen.

Bei einer derartigen Ausbildung kann es darüber hinaus in einer weiterbildenden Ausführung vorgesehen sein, dass die ersten Fortsätze einen Anschlag zur Begrenzung des Schwenkwinkels zwischen dem ersten und dem dritten Wischblattadapterelement ausbilden.

Zur Erzielung der translatorischen Bewegung des ersten Wischblattadapterelements ist es vorgesehen, dass an dem ersten Wischblattadapterelement zweite Fortsätze oder Haltestege ausgebildet sind, die zur Erzielung der translatorischen Bewegung zwischen dem ersten und dem zweiten Wischblattadapterelement in eine Führung oder in eine schlitzförmige Aufnahmeöffnung eingreifen.

Weitere vorteilhafte Ausgestaltungen der Erfindung betreffen insbesondere die Orientierung der einzelnen Wischblattadapterelemente zueinander im Montage- bzw. Demontagezustand. So ist es in einer ersten Ausgestaltung vorgesehen, dass an dem dritten Wischblattadapterelement dritte, vorzugsweise zylindrische Fortsätze ausgebildet sind, die zum Ausbilden einer Rastverbindung in einer Montage- bzw. Demontagestellung des Wischblattadapters in Halteöffnungen eingreifen, die am zweiten Wischblattadapterelement ausgebildet sind.

Eine weitere Ausgestaltung sieht vor, dass an dem ersten Wischblattadapterelement vierte, vorzugsweise zylindrische Fortsätze ausgebildet sind, die zumindest zur Begrenzung der translatorischen Bewegung des ersten Wischblattadapterelements mit am dritten Wischblattadapterelement ausgebildeten Halteöffnungen zusammenwirken.

Zuletzt umfasst die Erfindung auch eine Wischeinrichtung zum Reinigen von Fahrzeugscheiben, umfassend einen erfindungsgemäßen Wischarm sowie ein erfindungsgemäßes Wischblatt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine erfindungsgemäße Wischeinrichtung zum Reinigen einer Fahrzeugscheibe, bestehend aus einem erfindungsgemäßen Wischblatt und einem erfindungsgemäßen Wischarm, in einer perspektivischen Darstellung,
- Fig. 2: in Explosionsdarstellung die Bestandteile einer ersten Ausführungsform der erfindungsgemäßen Wischeinrichtung,
- Fig. 3: einen Längsschnitt durch den Verbindungsbereich zwischen einem Wischblattadapter und einem Wischarm
- Fig. 4: in perspektivischer Einzeldarstellung ein gegenüber der Fig. 2 abgewandeltes Wischblattadapterelement,
- Fig. 5: einen Längsschnitt durch den Verbindungsbereich zwischen einem Wischblattadapter und einem Wischarm unter Verwendung des Wischblattadapterelements gemäß der Fig. 4,
- Fig. 6 bis Fig. 8: einen Demontagevorgang eines Wischblatts von einem Wischarm während verschiedener Phasen, jeweils im Längsschnitt,
- Fig. 9: eine gegenüber Fig. 2 abgewandelte Ausführungsform der Wischeinrichtung in Explosionsdarstellung,
- Fig. 10: in teilweise geschnittener Darstellung eine perspektivische Ansicht auf den Verbindungsbereich der Wischeinrichtung gemäß Fig. 9,
- Fig. 11: einen Schnitt durch den Verbindungsbereich der Wischeinrichtung gemäß Fig. 10 und
- Fig. 12 und Fig. 13: in jeweils teilweise geschnittener perspektivischer Darstellung die Arbeits- bzw. Demontagestellung des Sicherungselements am Wischarm bei der Wischeinrichtung gemäß Fig. 9.
Gleiche Elemente bzw. Elemente mit gleicher Funktion sind in den Figuren mit den gleichen Bezugsziffern versehen.

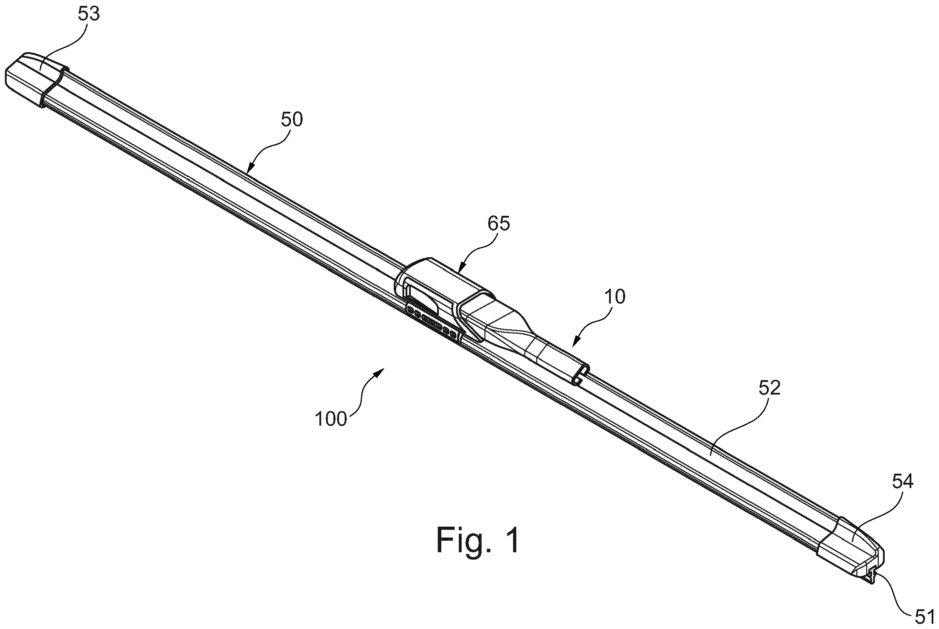

In der Fig. 1 ist eine erste Wischeinrichtung 100 einer Scheibenwischanlage zum Reinigen einer nicht gezeigten Fahrzeugscheibe eines Kraftfahrzeugs dargestellt. Die Wischeinrichtung 100 weist einen lediglich teilweise dargestellten Wischarm 10 sowie ein an dem Wischarm 10 austauschbar befestigtes Wischblatt 50 auf. Das Wischblatt 50 umfasst einen an die Fahrzeugscheibe anlegbaren Wischgummi 51, der innerhalb eines Wischblattkörpers 52 angeordnet ist. Der langgestreckte Wischblattkörper 52 weist an seinen beiden Endbereichen jeweils eine Abdeckkappe 53, 54 auf, sowie, an wenigstens einer Längsseite, aus dem Stand der Technik bekannte und daher nicht dargestellte Sprühöffnungen zum Aufbringen einer Waschflüssigkeit auf die Fahrzeugscheibe. Darüber hinaus ist das Wischblatt 50, wie ebenfalls an sich aus dem Stand der Technik bekannt, als beheizbares Wischblatt 50 ausgebildet.

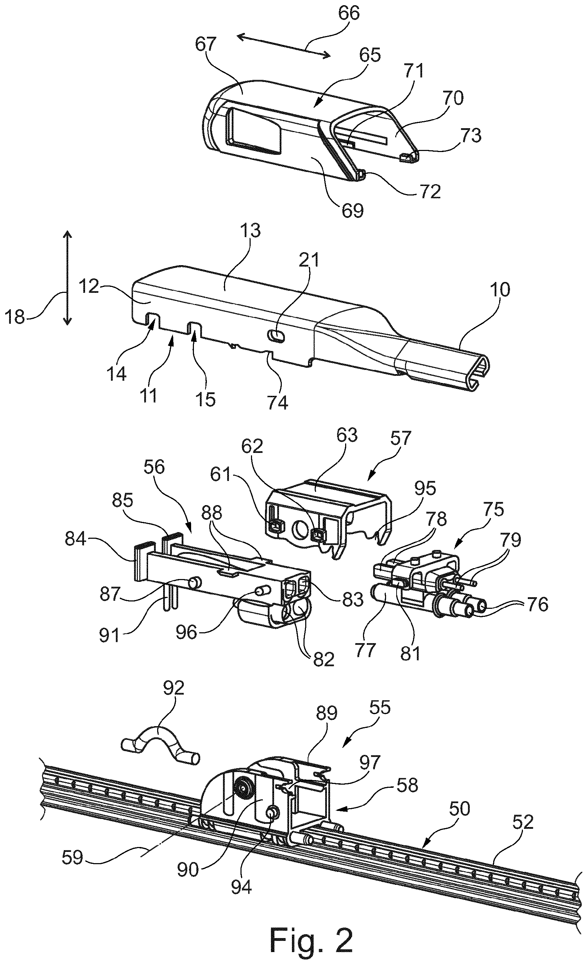

Mit dem Wischblattkörper 52 des Wischblatts 50 ist, wie insbesondere anhand der Fig. 2 erkennbar ist, ein Wischblattadapter 55 verbunden. Der Wischblattadapter 55 dient der austauschbaren Befestigung des Wischblatts 50 am Wischarm 10. Der Wischblattadapter 55 besteht aus drei miteinander verbundenen Wischblattadapterelementen 56 bis 58. Die Wischblattadapterelemente 56 bis 58 sind als Spritzgussteile aus Kunststoff ausgebildet, wobei das zweite Wischblattadapterelement 57 und das dritte Wischblattadapterelement 58 in einer Drehachse 59 schwenkbar zueinander angeordnet sind, um beim Schwenken des Wischarms 10 während des Wischbetriebs eine Anpassung bzw. eine Anlage des Wischblatts 50 an die üblicherweise gewölbt ausgebildete Fahrzeugscheibe sicherzustellen.

Der aus Blech bestehende Wischarm 10 ist als Stand-/Biegeteil ausgebildet und weist in einem Aufnahmebereich 11 für den Wischblattadapter 55 einen im Wesentlichen U-förmigen Querschnitt auf. Hierzu sind im Aufnahmebereich 11 zwei parallel zueinander angeordnete Seitenwände 12 und eine die beiden Seitenwände 12 miteinander verbindende Querwand 13 vorgesehen, die die Oberseite des Wischarms 10 im Aufnahmebereich 11 ausbildet. Auf der der Querwand 13 abgewandten Seite der beiden Seitenwände 12 weisen diese jeweils zwei Aufnahmeöffnungen 14, 15 auf, die in Längsrichtung des Wischarms 10 voneinander beabstandet angeordnet sind. Die beiden Aufnahmeöffnungen 14, 15 weisen senkrecht zur Querwand 13 bzw. parallel zu einer durch den Doppelpfeil 18 gekennzeichneten Montage- bzw. Demontagerichtung des Wischblatts 50 am Wischarm 10 (wobei die Montage- bzw. Demontagerichtung zumindest im Wesentlichen senkrecht zur Wischarmlängsachse im Aufnahmebereich 11 angeordnet ist) verlaufende Seitenkanten auf. Die Aufnahmeöffnungen 14, 15 wirken formschlüssig mit an den Seiten des zweiten Wischblattadapterelements 57 einstückig angeformten Fortsätze 61, 62 zusammen, die in die Aufnahmeöffnungen 14, 15 einführbar sind. Bei in den Aufnahmeöffnungen 14, 15 eingeführten Fortsätzen 61, 62 schließt die Oberseite 63 des zweiten Wischblattadapterelements 57 in etwa bündig mit der Unterseite der Querwand 13 des Wischarms 10 ab.

Zur Sicherung des Wischblattadapters 55 bzw. des Wischarms 10 in einer Wisch- bzw. Arbeitsstellung ist der Wischarm 10 zumindest im Aufnahmebereich 11 von einem, einen im Wesentlichen U-förmigen Querschnitt aufweisenden Sicherungselement 65 überdeckt. Das Sicherungselement 65 ist in Richtung des Doppelpfeils 66 (senkrecht zur Richtung des Doppelpfeils 18) hin- und herbeweglich angeordnet und umschließt bzw. überdeckt den Aufnahmebereich 11 am Wischarm 10 auf der dem Wischblatt 50 abgewandten Seite. Das aus Kunststoff bestehende und als Spritzgussteil ausgebildete Sicherungselement 65 weist eine in Überdeckung mit der Querwand 13 des Wischarms 10 angeordnete Oberseite 67 auf. Darüber hinaus umfasst das Sicherungselement 65 zwei zueinander parallel angeordnete Seitenwände 69, 70, an denen an der der Oberseite 67 abgewandten Seite nach innen ragende Haltevorsprünge 71 angeformt sind. Die Haltevorsprünge 71 dienen, wie an sich aus dem Stand der Technik bekannt, dem Freigeben bzw. Verschließen der Aufnahmeöffnungen 14, 15 am Wischarm 10, abhängig von der Position des Sicherungselements 65. Zur Montage- bzw. Demontage des Wischblatts 50 am bzw. vom Wischarm 10 ist das Sicherungselement 65 in einer derartigen Position, dass die Haltevorsprünge 71 die Aufnahmeöffnungen 14, 15 am Wischarm 10 freigeben, sodass das Wischblatt 50 mit seinen Fortsätzen 61, 62 in die Aufnahmeöffnungen 14, 15 in die im Wesentlichen senkrecht zur Wischblattlängsachse verlaufenden Montage- bzw. Demontagerichtung eingeführt bzw. aus dieser herausgezogen werden kann. Zur Sicherung des Wischblatts 50 am Wischarm 10 kann das Sicherungselement 65 in Richtung des Wischarms 10 bewegt werden, bis dieses eine Verriegelungsposition erreicht, die durch an der Innenseite der Seitenwände 69, 70 angeformte Anschläge 72, 73 erzielt wird, wenn diese in Halteöffnungen 74 am Wischarm 10 eingreifen. In dieser Position versperren die Haltevorsprünge 71 die Aufnahmeöffnungen 14, 15 und verhindern eine Bewegung des Wischblatts 50 in Richtung des Doppelpfeils 18 am Wischarm 10.

Innerhalb des U-förmigen Querschnitts des Wischarms 10 ist in dem Wischarm 10 ein Adapterelement 75 zur Zuführung von Waschflüssigkeit sowie zur Stromversorgung für die im Wischblattkörper 52 angeordnete Heizeinrichtung des Wischblatts 50 angeordnet. Das als Spritzgussteil ausgebildete Adapterelement 75 weist auf der dem Wischblatt 50 abgewandten Seite zwei Zulaufstutzen 76 für die Waschflüssigkeit auf, die mit nicht dargestellten, im Querschnitt des Wischarms 10 angeordneten und mit einer Waschflüssigkeitsquelle verbundenen Versorgungsschläuchen verbunden sind. In Verlängerung der Zulaufstutzen 76 weisen diese auf der dem Wischblattadapter 55 zugewandten Seite zwei Auslässe 77 für die Waschflüssigkeit auf. Oberhalb und parallel zu den Auslässen 77 sind zwei der Stromübertragung dienende Anschlussstecker 78 angeordnet, die auf der dem Wischblattadapter 55 abgewandten Seite mit innerhalb des Wischarms 10 geführten Leitungen 79 verbunden sind. Die Auslässe 77 sowie die Anschlussstecker 78 verlaufen parallel zur Querwand 13 des Wischarms 10 bzw. parallel zur Richtung des Doppelpfeils 66, das heißt in der Verschieberichtung des Sicherungselements 65.

Das Adapterelement 75 ist durch eine Rastverbindung mit dem Wischarm 10 verbunden. Hierzu weist das Adapterelement 75 an einander abgewandten Seitenwänden jeweils einen Haltenocken 81 auf, der eine rechteckförmige Außenkontur mit zwei gerundeten Stirnkanten aufweist. Die Haltenocken 81 greifen in entsprechend der Kontur der Haltenocken 81 ausgebildete Halteöffnungen 21 am Wischarm 10 ein, derart, dass das Adapterelement 75 zumindest im Wesentlichen starr innerhalb des Wischarms 10 angeordnet ist.

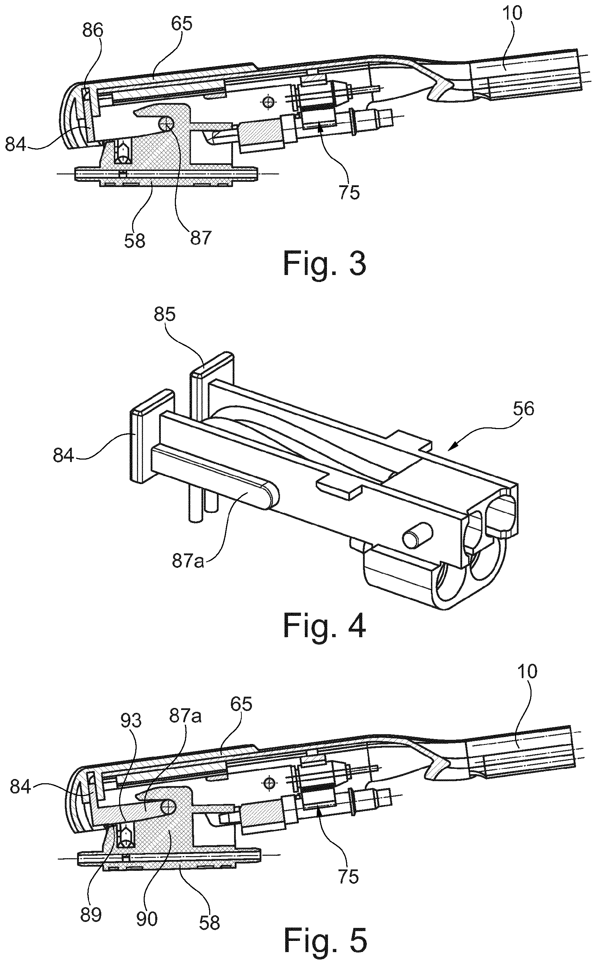

Das Adapterelement 75 wirkt mit dem ersten Wischblattadapterelement 56 zusammen. Hierzu weist das erste Wischblattadapterelement 56 auf der dem Adapterelement 75 zugewandten Seite zwei mit den Auslässen 77 verbindbare Einlaufstutzen 82 sowie ein Steckeranschlusselement 83 auf. Wesentlich ist, dass das erste Wischblattadapterelement 56 innerhalb des Querschnitts des Wischarms 10 translatorisch parallel zur Querwand 13 bzw. zur Richtung des Doppelpfeils 66, das heißt in der Verschieberichtung des Sicherungselements 65, beweglich angeordnet ist. Hierzu weist das erste Wischblattadapterelement 56 auf der dem Adapterelement 75 abgewandten Seite zwei, als stirnseitige Abschlüsse dienende, plattenförmige Mitnahmeelemente 84, 85 bzw. Haltevorsprünge auf, die entsprechend der Darstellung der Fig. 3 in Halteöffnungen 86 des Sicherungselements 65 formschlüssig eingreifen, die an der Unter- bzw. Innenseite des Sicherungselements 65 angeordnet sind.

Das erste Wischblattadapterelement 56 weist darüber hinaus in etwa in der Mitte jeder Seitenfläche einen zylindrisch geformten ersten Fortsatz 87 auf, der in eine in dem dritten Wischblattadapterelement 58 ausgebildete, insbesondere schlitzförmige Ausnehmung eingreift, sodass das erste Wischblattadapterelement 56 zum dritten Wischblattadapterelement 58 um die Drehachse der ersten Fortsätze 87 drehbar gelagert ist. An der Oberseite des ersten Wischblattadapterelements 56 weist dieses darüber hinaus nach außen ragende, in Draufsicht jeweils eine rechteckförmige Form aufweisende zweite Fortsätze 88 auf, die bei montiertem Wischblattadapter 55 an der Innen- bzw. Unterseite des einen U-förmigen Querschnitt aufweisenden zweiten Wischblattadapterelements 57 anliegen. Auf der dem zweiten Wischblattadapterelement 57 abgewandten Seite der zweiten Fortsätze 88 ragen diese an die Oberseiten 89 der Seitenwände 90 des ebenfalls einen im Wesentlichen U-förmigen Querschnitt aufweisenden dritten Wischblattadapterelements 58 heran, sodass die zweiten Fortsätze 88 zwischen den beiden Wischblattadapterelementen 56, 58 geführt sind, um die translatorische Bewegung des ersten Wischblattadapterelements 56 zu ermöglichen.

Die elektrische Verbindung vom ersten Wischblattadapterelement 56 zum dritten Wischblattadapterelement 58 erfolgt mittels im Bereich des ersten Wischblattadapterelements 56 angeordneter Verbindungsleitungen 91. Ebenso sind kurze Verbindungsschläuche 92 vorgesehen, die die hydraulische Versorgung des Wischblattkörpers 52 bzw. des dritten Wischblattadapterelements 58 vom ersten Wischblattadapterelement 56 sicherstellen.

Anstelle der zylindrisch ausgebildeten ersten Fortsätze 87 kann es entsprechend der Darstellung der Fig. 4 und 5 vorgesehen sein, dass die ersten Fortsätze 87a in Form von länglichen Fortsätzen 87a ausgebildet sind. Dies hat entsprechend der Darstellung der Fig. 5 zur Folge, dass die Unterseite 93 des ersten Fortsatzes 87a zur Beschränkung des Schwenkwinkels zwischen dem ersten Wischblattadapterelement 56 zum dritten Wischblattadapterelement 58 beim Erreichen des maximalen Schwenkwinkels an der Oberseite 89 der Seitenwand 90 des dritten Wischblattadapterelements 58 anliegt. Demgegenüber ist anhand der Darstellung der Fig. 3 bei der Verwendung von ersten Fortsätzen 57 erkennbar, dass ein gegenüber der Verwendung von ersten Fortsätzen 87a vergrößerter Schwenkwinkel zwischen den Wischblattadapterelementen 56 und 58 realisierbar ist.

Am dritten Wischblattadapterelement 58 sind an den Außenseiten der Seitenwände 90 darüber hinaus dritte Fortsätze 94 ausgebildet, die als im Querschnitt zylindrisch ausgebildete dritte Fortsätze 94 mit an dem zweiten Wischblattadapterelement 57 ausgebildeten Halteöffnungen 95 zusammenwirken. Zuletzt weist das erste Wischblattadapterelement 56 auf der dem Adapterelement 75 zugewandten Seite im Bereich seiner beiden abgewandten Seitenflächen jeweils vierte Fortsätze 96 auf, die im Querschnitt ebenfalls kreisförmig ausgebildet sind. Die vierten Fortsätze 96 wirken mit am dritten Wischblattadapterelement 58 ausgebildeten weiteren Halteöffnungen 97 zusammen und begrenzen die translatorische Verschiebbarkeit des ersten Wischblattadapterelements 56 zum dritten Wischblattadapterelement 58, da die weiteren Halteöffnungen 97 für die vierten Fortsätze 96 als Anschlagelemente wirken.

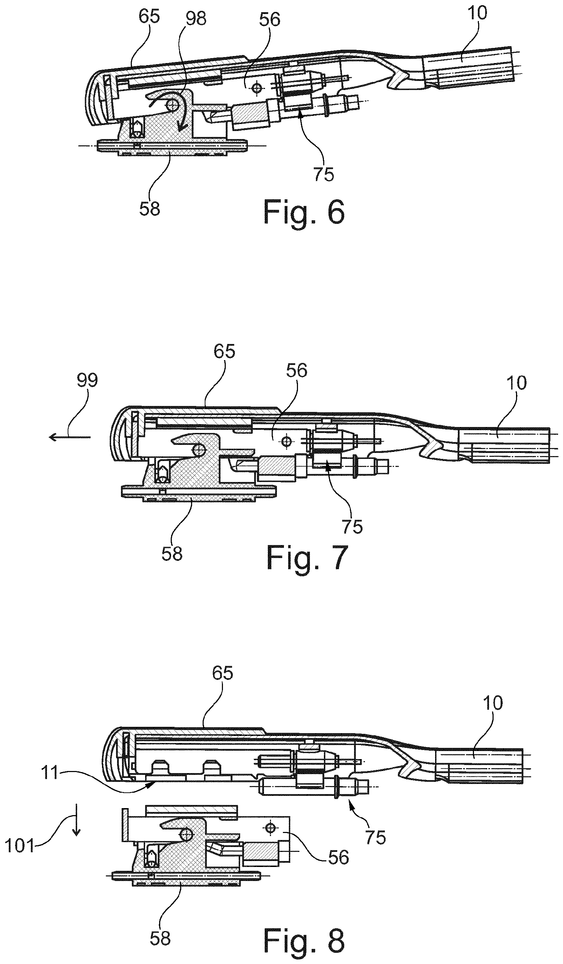

Der Demontagevorgang des Wischblatts 50 vom Wischarm 10 wird nunmehr anhand der Figurenfolge der Fig. 6 bis 8 erläutert: Zunächst ist es erforderlich, das Wischblatt 50 bzw. das dritte Wischblattadapterelement 58 parallel zum Wischarm 10 im Aufnahmebereich 11 auszurichten. Dies erfolgt durch eine Drehung beispielsweise des Wischarms 10 in Richtung des Pfeils 98 im Uhrzeigersinn (Fig. 6). Die entsprechende Ausrichtung des Wischblatts 50 zum Wischarm 10 ist in der Fig. 7 dargestellt. Anschließend wird das Sicherungselement 65 in Richtung des Pfeils 99 bewegt, wobei durch die Kopplung des Sicherungselements 65 mit dem ersten Wischblattadapterelement 56 dieses ebenfalls mitbewegt wird. Durch die Bewegung des Sicherungselements 65 werden zum einen die Aufnahmeöffnungen 14, 15 am Wischarm 10 freigegeben, zum anderen wird die hydraulische und elektrische Verbindung zwischen dem Wischblattadapter 55 über das erste Wischblattadapterelement 56 am Adapterelement 75 gelöst. Anschließend erfolgt entsprechend der Darstellung der Fig. 8 eine Relativbewegung zwischen dem Wischarm 10 und dem Wischblatt 50 bzw. dem Wischblattadapter 55 in Richtung des Pfeils 101, wodurch sich der Wischblattadapter 55 aus dem Aufnahmebereich 11 des Wischarms 10 entfernen lässt. Die Montage des Wischblatts 50 bzw. des Wischblattadapters 55 am Wischarm 10 erfolgt sinngemäß in umgekehrter Reihenfolge.

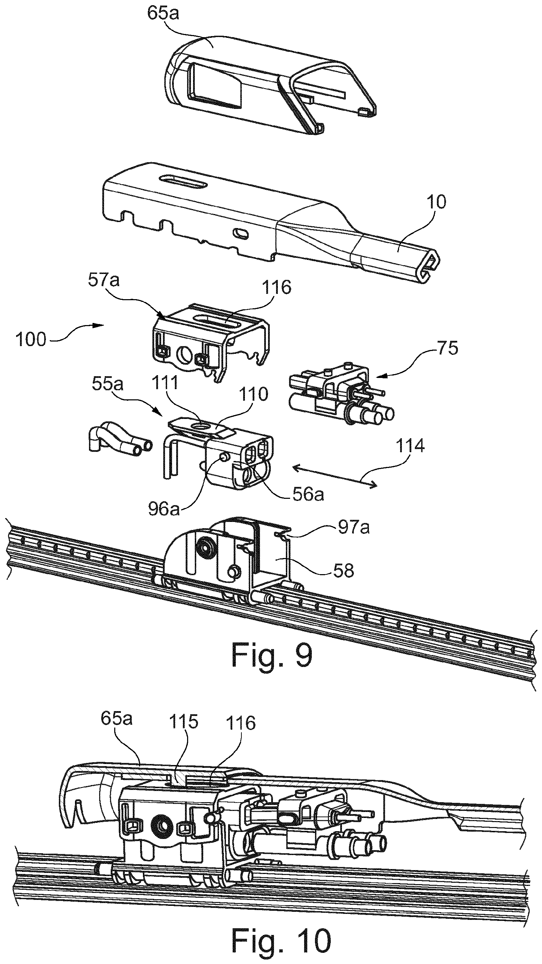

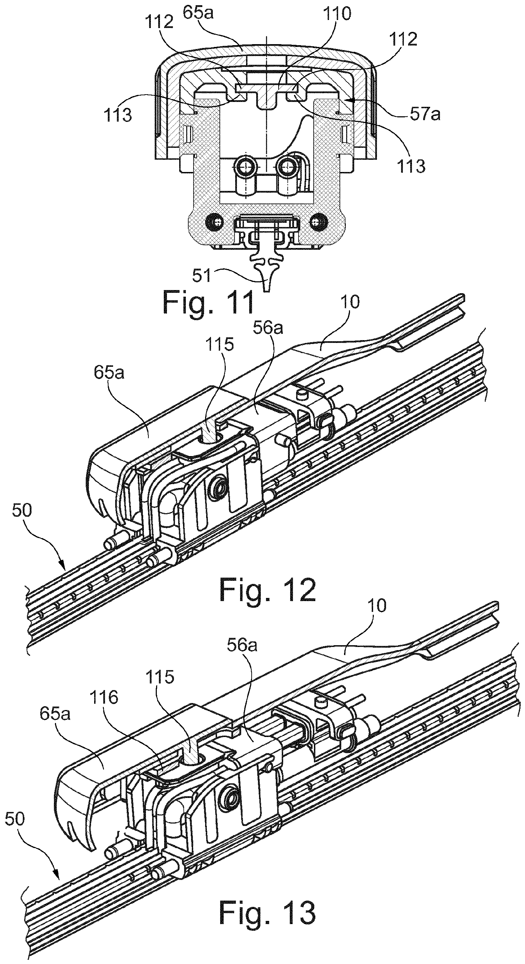

In der Fig. 9 ist eine zweite, abgewandelte Wischeinrichtung 100 dargestellt, die sich von der oben beschriebenen Ausführungsform insbesondere durch einen anders ausgebildeten Wischblattadapter 55a unterscheidet. Insbesondere ist es erkennbar, dass das erste Wischblattadapterelement 56a an seiner Oberseite eine höckerartige Erhebung 110 aufweist, in der mittig eine (zylindrische) Aufnahmeöffnung 111 ausgebildet ist. Wie insbesondere anhand der Darstellung der Fig. 11 erkennbar ist, weist die Erhebung 110 darüber hinaus einen T-förmigen Querschnitt mit zwei Haltestegen 112 auf, die in an der Innen- bzw. Unterseite des zweiten Wischblattadapterelements 57a ausgebildete, schlitzförmige Aufnahmeöffnungen 113 eingreifen. Über die Haltestege 112 und Aufnahmeöffnungen 113 ist das erste Wischblattadapterelement 56a zum zweiten Wischblattadapterelement 57a in Richtung des Doppelpfeils 114 translatorisch beweglich angeordnet.

In die Aufnahmeöffnung 113 ragt, wie insbesondere anhand der Fig. 10, 12 und 13 erkennbar ist, ein am Sicherungselement 65a angeformter Haltevorsprung in Form eines Mitnahmestifts 115, der dabei eine am zweiten Wischblattadapterelement 57a ausgebildete, längliche, schlitzförmige Durchgangsöffnung 116 durchquert. Über den Mitnahmestift 115 ist somit das Sicherungselement 65a mit dem ersten Wischblattadapterelement 56a gekoppelt bzw. verbunden. In Analogie zu dem zunächst beschriebenen Ausführungsbeispiel weist auch das erste Wischblattadapterelement 56a an gegenüberliegenden Seitenflächen vierte Fortsätze 96a auf, die in entsprechende Halteöffnungen 97a eingreifen, die an dem dritten Wischblattadapterelement 58a ausgebildet sind.

In der Fig. 12 ist die Betriebsstellung des Wischblatts 50 am Wischarm 10 dargestellt, bei der das erste Wischblattadapterelement 56a hydraulisch und elektrisch mit dem Adapterelement 75 verbunden bzw. gekoppelt ist. Demgegenüber ist in der Fig. 12 der Zustand dargestellt, bei dem das Sicherungselement 65a zusammen mit dem ersten Wischblattadapterelement 56a in eine Montage- bzw. Demontagestellung bewegt wurde, sodass das erste Wischblattadapterelement 56a von dem Sicherungselement 65a beabstandet und die elektrische bzw. hydraulische Verbindung unterbrochen ist.

Die soweit beschriebene Wischeinrichtung 100, insbesondere deren Wischarm 10 sowie Wischblatt 50 können in vielfältiger Art und Weise abgewandelt bzw. modifiziert werden, ohne vom Erfindungsgedanken abzuweichen.

### Bezugszeichenliste

- 10: Wischarm
- 11: Aufnahmebereich
- 12: Seitenwand
- 13: Querwand
- 14: Aufnahmeöffnung
- 15: Aufnahmeöffnung
- 18: Doppelpfeil
- 21: Halteöffnung

- 50: Wischblatt
- 51: Wischgummi
- 52: Wischblattkörper
- 53: Abdeckkappe
- 54: Abdeckkappe
- 55, 55a: Wischblattadapter
- 56, 56a: Wischblattadapterelement
- 57, 57a: Wischblattadapterelement
- 58: Wischblattadapterelement
- 59: Drehachse
- 61: Fortsatz
- 62: Fortsatz
- 63: Oberseite
- 65, 65a: Sicherungselement
- 66: Doppelpfeil
- 67: Oberseite
- 69: Seitenwand
- 70: Seitenwand
- 71: Haltevorsprung
- 72: Anschlag
- 73: Anschlag
- 74: Halteöffnung
- 75: Adapterelement
- 76: Zulaufstutzen
- 77: Auslass
- 78: Anschlußstecker
- 79: Leitung
- 81: Haltenocken
- 82: Einlaufstutzen
- 83: Steckeranschlusselement
- 84: Mitnahmeelement
- 85: Mitnahmeelement
- 86: Halteöffnung
- 87, 87a: Fortsatz
- 88: Fortsatz
- 89: Oberseite
- 90: Seitenwand
- 91: Verbindungsleitung
- 92: Verbindungsschlauch
- 93: Unterseite
- 94: Fortsatz
- 95: Halteöffnung
- 96, 96a: Fortsatz
- 97, 97a: Halteöffnung
- 98: Pfeil
- 99: Pfeil

- 100: Wischeinrichtung
- 101: Pfeil
- 110: Erhebung
- 111: Aufnahmeöffnung
- 112: Haltesteg
- 113: Aufnahmeöffnung
- 114: Doppelpfeil
- 115: Mitnahmestift
- 116: Durchgangsöffnung

## Patentansprüche

1. Wischarm (10) für eine Scheibenwischanlage eines Kraftfahrzeugs, mit einem Aufnahmebereich (11) für einen aus mehreren Wischblattadapterelementen (56; 56a, 57; 57a, 58) bestehenden Wischblattadapter (55; 55a), wobei der Wischarm (10) ein Sicherungselement (65; 65a) aufweist, das den Aufnahmebereich (11) zumindest teilweise überdeckt, wobei das Sicherungselement (65; 65a) derart ausgebildet ist, dass es zwischen einer Demontagestellung, in der der Wischblattadapter (55; 55a) aus dem Aufnahmebereich (11) entnommen und einer Sperrstellung, in der der Wischblattadapter (55; 55a) in dem Aufnahmebereich (11) gehalten ist, beweglich ist, wobei im Aufnahmebereich (11) ein der Zuführung von Waschflüssigkeit und/oder der Stromzuführung dienendes Adapterelement (75) angeordnet ist, und wobei das Adapterelement (75) einerseits mit einer Versorgungsleitung für die Waschflüssigkeit und/oder einer elektrischen Leitung (79) verbindbar ist und andererseits einen Auslass (77) für die Waschflüssigkeit und/oder einen Steckeranschluss (78) für die elektrische Leitung (79) aufweist, wobei der Auslass (77) und/oder der Steckeranschluss (78) mit einem ersten Wischblattadapterelement (56; 56a) verbindbar ist,
**dadurch gekennzeichnet,**
**dass** das mit dem Adapterelement (75) verbindbare erste Wischblattadapterelement (56; 56a) mit dem Sicherungselement (65; 65a) gekoppelt ist, derart, dass entsprechend der Stellung des Sicherungselements (65; 65a) in der Sperrstellung das Adapterelement (75) mit dem ersten Wischblattadapterelement (56; 56a) verbunden und in der Demontagestellung das Adapterelement (75) vom ersten Wischblattadapterelement (56; 56a) getrennt ist.

2. Wischarm nach Anspruch 1 ,
**dadurch gekennzeichnet,**
**dass** die Kopplung des Sicherungselements (65; 65a) mit dem ersten Wischblattadapterelement (56; 56a) über eine Formschlussverbindung erfolgt, die einen Haltevorsprung (84, 85; 115) am Sicherungselement (65a) oder am ersten Wischblattadapterelement (56) aufweist, der in eine Öffnung (86; 111) am ersten Wischblattadapterelement (56a) oder am Sicherungselement (65) eingreift.

3. Wischarm nach Anspruch 1 oder 2,
**dadurch gekennzeichnet,**
**dass** der Aufnahmebereich (11) einen U-förmigen Querschnitt mit zwei zueinander parallelen Seitenwänden (12) und einer die beiden Seitenwände (12) verbindenden Querwand (13) aufweist, und mit wenigstens zwei, an den Seitenwänden (12) ausgebildeten Aufnahmeöffnungen (14, 15) zur Aufnahme von am Wischblattadapter (55; 55a) angeordneten Fortsätzen (61, 62) in einer zumindest im Wesentlichen senkrecht zur Querwand (13) verlaufenden Montage- bzw. Demontagerichtung (18), wobei das Sicherungselement (65; 65a) in einer Montage- bzw. Demontagestellung des Wischblattadapters (55; 55a) die Aufnahmeöffnungen (14, 15) freigibt.

4. Wischarm nach einem der Ansprüche 1 bis 3,
**dadurch gekennzeichnet,**
**dass** der Auslass (77) und/oder der Steckeranschluss (78) mit der Betätigungsrichtung (66) des Sicherungselements (65; 65a) ausgerichtet ist.

5. Wischarm nach Anspruch 3 oder 4,
**dadurch gekennzeichnet,**
**dass** das Adapterelement (75) auf der der Seitenwand (12) zugewandten Seite jeweils einen Haltenocken (81) aufweist, der in eine einen geschlossenen Querschnitt aufweisende Halteöffnung (21) der Seitenwand (12) hineinragt.

6. Wischblatt (50) zur Befestigung an einem Wischarm (10) nach einem der nach Ansprüche 1 bis 5, mit einem aus mehreren Wischblattadapterelementen (56; 56a, 57; 57a, 58) bestehenden Wischblattadapter (55; 55a), der dazu ausgebildet ist, in dem Wischarm (10) aufgenommen zu werden, wobei die Montage- bzw. Demontagerichtung (18) des Wischblattadapters (55; 55a) am bzw. vom Wischarm (10) im Wesentlichen senkrecht zur Wischblattlängsachse verläuft,
**dadurch gekennzeichnet,**
**dass** an dem ersten Wischblattadapterelement (56; 56a) des Wischblattadapters (55; 55a) ein Einlass (82) zur Zuführung einer Waschflüssigkeit und/oder ein Anschlusselement (83) zur Stromzuführung ausgebildet ist, und dass der Einlass (82) und/oder das Anschlusselement (83) senkrecht zur Montage- bzw. Demontagerichtung (18) des Wischblattadapters (55; 55a) am Wischarm (10) ausgerichtet ist.

7. Wischblatt nach Anspruch 6,
**dadurch gekennzeichnet,**
**dass** der Wischblattadapter (55; 55a) wenigstens drei Wischblattadapterelemente (56; 56a, 57; 57a, 58) aufweist, dem ersten Wischblattadapterelement (56; 56a), das dazu ausgebildet ist, mit einem Adapterelement (75) am Wischarm (10) verbunden zu werden, einem zweiten Wischblattadapterelement (57; 57a), an dessen Seitenwänden Fortsätze (61, 62) zum Einführen in Aufnahmeöffnungen (14, 15) eines Wischarms (10) ausgebildet sind, und einem dritten Wischblattadapterelement (58), das mit einem Wischblattkörper (52) verbunden ist.

8. Wischblatt nach Anspruch 7,
**dadurch gekennzeichnet,**
**dass** das zweite und das dritte Wischblattadapterelement (57; 57a, 58) schwenkbar zueinander angeordnet sind, und dass das erste Wischblattadapterelement (56; 56a) schwenkbar zum dritten Wischblattadapterelement (58) und translatorisch beweglich zum zweiten Wischblattadapterelement (57; 57a) angeordnet ist.

9. Wischblatt nach Anspruch 8,
**dadurch gekennzeichnet,**
**dass** das erste Wischblattadapterelement (56) erste Fortsätze (87; 87a) aufweist, die zur Erzielung der Schwenkbarkeit zwischen dem ersten und dem dritten Wischblattadapterelement (56, 58) in Aussparungen des dritten Wischblattadapterelements (58) eingreifen.

10. Wischblatt nach Anspruch 9,
**dadurch gekennzeichnet,**
**dass** die ersten Fortsätze (87a) einen Anschlag zur Begrenzung des Schwenkwinkels zwischen dem ersten und dem dritten Wischblattadapterelement (56, 58) ausbilden.

11. Wischblatt nach einem der Ansprüche 8 bis 10,
**dadurch gekennzeichnet,**
**dass** an dem ersten Wischblattadapterelement (56; 56a) zweite Fortsätze (88) oder Haltestege (112) ausgebildet sind, die zur Erzielung der translatorischen Bewegung zwischen dem ersten und dem zweiten Wischblattadapterelement (56; 56a, 57; 57a) in eine Führung oder in eine schlitzförmige Aufnahmeöffnung (113) eingreifen.

12. Wischblatt nach einem der Ansprüche 8 bis 11,
**dadurch gekennzeichnet,**
**dass** an dem dritten Wischblattadapterelement (58) dritte, vorzugsweise zylindrische Fortsätze (94) ausgebildet sind, die zum Ausbilden einer Rastverbindung in einer Montage- bzw. Demontagestellung des Wischblattadapters (55; 55a) in Halteöffnungen (95) eingreifen, die am zweiten Wischblattadapterelement (58) ausgebildet sind.

13. Wischblatt nach einem der Ansprüche 8 bis 11,
**dadurch gekennzeichnet,**
**dass** an dem ersten Wischblattadapterelement (56; 56a) vierte, vorzugsweise zylindrische Fortsätze (96; 96a) ausgebildet sind, die zumindest zur Begrenzung der translatorischen Bewegung des ersten Wischblattadapterelements (56; 56a) mit am dritten Wischblattadapterelement (58) ausgebildeten Halteöffnungen (97; 97a) zusammenwirken.

14. Wischeinrichtung (100) zum Reinigen von Fahrzeugscheiben, umfassend einen Wischarm (10) nach einem der Ansprüche 1 bis 5 und ein Wischblatt (50) nach einem der Ansprüche 6 bis 13.

## Claims

1. A wiper arm (10) for a windscreen wiper system of a motor vehicle, with a receiving region (11) for a wiper blade adapter (55; 55a) consisting of several wiper blade adapter elements (56; 56a, 57; 57a, 58), wherein the wiper arm (10) has a securing element (65; 65a) which at least partially covers the receiving region (11), wherein the securing element (65; 65a) is constructed such that it is movable between a dismantling position, in which the wiper blade adapter (55; 55a) is removed from the receiving region (11), and a locking position, in which the wiper blade adapter (55; 55a) is held in the receiving region (11), wherein in the receiving region (11) an adapter element (75) is arranged for the supplying of washing fluid and/or for the current supply, and wherein the adapter element (75) is able to be connected on the one hand with a supply line for the washing fluid and/or with an electric line (79), and on the other hand has an outlet (77) for the washing fluid and/or a plug connection (78) for the electric line (79), wherein the outlet (77) and/or the plug connection (78) is able to be connected with a first wiper blade adapter element (56; 56a),
**characterized in that**
the first wiper blade adapter element (56; 56a), connectable with the adapter element (75), is coupled with the securing element (65; 65a) such that according to the position of the securing element (65; 65a) in the locking position the adapter element (75) is connected with the first wiper blade adapter element (56; 56a) and in the dismantling position the adapter element (75) is separated from the first wiper blade adapter element (56; 56a).

2. The wiper arm according to Claim 1,
**characterized in that**
the coupling of the securing element (65; 65a) with the first wiper blade adapter element (56; 56a) takes place via a form-fitting connection, which has a holding projection (84, 85; 115) on the securing element (65a) or on the first wiper blade adapter element (56), which engages into an opening (86; 111) on the first wiper blade adapter element (56a) or on the securing element (65).

3. The wiper arm according to Claim 1 or 2,
**characterized in that**
the receiving region (11) has a U-shaped cross-section with two side walls (12) parallel to one another, and with a transverse wall (13) connecting the two side walls (12), and with at least two receiving openings (14, 15) formed on the side walls (12) for receiving extensions (61, 62) arranged on the wiper blade adapter (55; 55a) in a mounting or respectively dismantling direction (18) running at least substantially perpendicularly to the transverse wall (13), wherein the securing element (65; 65a) in a mounting or respectively dismantling position of the wiper blade adapter (55; 55a) exposes the receiving openings (14, 15).

4. The wiper arm according to one of Claims 1 to 3,
**characterized in that**
the outlet (77) and/or the plug connection (78) is aligned with the mounting or respectively dismantling direction (18) of the securing element (65; 65a).

5. The wiper arm according to one of Claims 1 to 4,
**characterized in that**
the adapter element (75) has respectively a holding protuberance (81) on the side facing the side wall (12), which projects into a holding opening (21), having a closed cross-section, of the side wall (12).

6. A wiper blade (50) for fastening to a wiper arm (10) according to one of Claims 1 to 5, with a wiper blade adapter (55; 55a) consisting of several wiper blade adapter elements (56; 56a, 57; 57a, 58), which is constructed to be received in the wiper arm (10), wherein the mounting or respectively dismantling direction (18) of the wiper blade adapter (55; 55a) on or respectively from the wiper arm (10) runs substantially perpendicularly to the longitudinal axis of the wiper blade,
**characterized in that**
on the first wiper blade adapter element (56; 56a) of the wiper blade adapter (55; 55a) an inlet (82) is constructed for the supplying of a washing fluid and/or a connection element (83) is constructed for the current supply, and that the inlet (82) and/or the connection element (83) is aligned perpendicularly to the mounting or respectively dismantling direction (18) of the wiper blade adapter (55; 55a) on the wiper arm (10).

7. The wiper blade according to Claim 6,
**characterized in that**
the wiper blade adapter (55; 55a) has at least three wiper blade adapter elements (56; 56a, 57; 57a, 58), the first wiper blade adapter element (56; 56a), which is constructed to be connected with an adapter element (75) on the wiper arm (10), a second wiper blade adapter element (57; 57a), on the side walls of which extensions (61, 62) are constructed for introducing in receiving openings (14, 15) of a wiper arm (10), and a third wiper blade adapter element (58), which is connected with a wiper blade body (52).

8. The wiper blade according to Claim 7,
**characterized in that**
the second and the third wiper blade adapter elements (57; 57a, 58) are arranged swivelably with respect to one another, and that the first wiper blade adapter element (56; 56a) is arranged swivelably to the third wiper blade adapter element (58) and movably in a translatory manner to the second wiper blade adapter element (57; 57a).

9. The wiper blade according to Claim 8,
**characterized in that**
the first wiper blade adapter element (56) has first extensions (87; 87a), which engage in recesses of the third wiper blade adapter element (58) to achieve the swivelability between the first and the third wiper blade adapter elements (56, 58).

10. The wiper blade according to Claim 9,
**characterized in that**
the first extensions (87a) form a stop for delimitation of the swivel angle between the first and the third wiper blade adapter elements (56, 58) .

11. The wiper blade according to one of Claims 8 to 10,
**characterized in that**
on the first wiper blade adapter element (56; 56a) second extensions (88) or holding webs (112) are constructed, which engage into a guide or into a slot-shaped receiving opening (113) to achieve the translatory movement between the first and the second wiper blade adapter elements (56; 56a, 57; 57a).

12. The wiper blade according to one of Claims 8 to 11,
**characterized in that**
on the third wiper blade adapter element (58) third, preferably cylindrical extensions (94) are constructed which, for forming a latching connection in a mounting or respectively dismantling position of the wiper blade adapter (55; 55a), engage in holding openings (95) which are formed on the second wiper blade adapter element (58).

13. The wiper blade according to one of Claims 8 to 11,
**characterized in that**
on the first wiper blade adapter element (56; 56a) fourth, preferably cylindrical extensions (96; 96a) are constructed which, at least for delimitation of the translatory movement of the first wiper blade adapter element (56; 56a), cooperate with holding openings (97; 97a) formed on the third wiper blade adapter element (58).

14. A wiper device (100) for cleaning vehicle windows, comprising a wiper arm (10) according to one of Claims 1 to 5 and a wiper blade (50) according to one of Claims 6 to 13.

## Revendications

1. Bras d'essuie-glace (10) pour un système d'essuie-glace d'un véhicule automobile, comprenant une zone de réception (11) pour un adaptateur de raclette d'essuie-glace (55 ; 55a) constitué de plusieurs éléments d'adaptateur de raclette d'essuie-glace (56 ; 56a, 57 ; 57a, 58), le bras d'essuie-glace (10) comprenant un élément de fixation (65 ; 65a) qui recouvre au moins partiellement la zone de réception (11), l'élément de fixation (65 ; 65a) étant conçu de manière à être mobile entre une position de démontage, dans laquelle l'adaptateur de raclette d'essuie-glace (55 ; 55a) est retiré de la zone de réception (11), et une position de blocage, dans laquelle l'adaptateur de raclette d'essuie-glace (55 ; 55a) est retenu dans la zone de réception (11), un élément adaptateur (75) servant à l'acheminement de liquide de lavage et/ou à l'alimentation électrique étant disposé dans la zone de réception (11), et l'élément adaptateur (75) pouvant d'une part être relié à une conduite d'alimentation pour le liquide de lavage et/ou à une ligne électrique (79) et comprenant d'autre part une sortie (77) pour le liquide de lavage et/ou un connecteur enfichable (78) pour la ligne électrique (79), la sortie (77) et/ou le connecteur enfichable (78) pouvant être reliés à un premier élément d'adaptateur de raclette d'essuie-glace (56 ; 56a), **caractérisé en ce que**
le premier élément d'adaptateur de raclette d'essuie-glace (56 ; 56a) pouvant être relié à l'élément adaptateur (75) est accouplé à l'élément de fixation (65 ; 65a) de telle sorte qu'en fonction de la position de l'élément de fixation (65 ; 65a), dans la position de blocage, l'élément adaptateur (75) est relié au premier élément d'adaptateur de raclette d'essuie-glace (56 ; 56a) et, dans la position de démontage, l'élément adaptateur (75) est séparé du premier élément d'adaptateur de raclette d'essuie-glace (56 ; 56a).

2. Bras d'essuie-glace selon la revendication 1, **caractérisé en ce que**
l'accouplement de l'élément de fixation (65 ; 65a) au premier élément d'adaptateur de raclette d'essuie-glace (56 ; 56a) s'effectue par le biais d'une liaison par complémentarité de forme qui comprend une saillie de retenue (84, 85 ; 115) sur l'élément de fixation (65a) ou sur le premier élément d'adaptateur de raclette d'essuie-glace (56), laquelle saillie de retenue vient en prise dans une ouverture (86 ; 111) sur le premier élément d'adaptateur de raclette d'essuie-glace (56a) ou sur l'élément de fixation (65).

3. Bras d'essuie-glace selon la revendication 1 ou 2, **caractérisé en ce que**
la zone de réception (11) présente une section transversale en forme de U dotée de deux parois latérales (12) parallèles l'une à l'autre et d'une paroi transversale (13) reliant les deux parois latérales (12), et d'au moins deux ouvertures de réception (14, 15) formées sur les parois latérales (12) et destinées à recevoir des prolongements (61, 62) disposés sur l'adaptateur de raclette d'essuie-glace (55 ; 55a) dans une direction de montage ou de démontage (18) s'étendant au moins sensiblement perpendiculairement à la paroi transversale (13), l'élément de fixation (65 ; 65a) libérant les ouvertures de réception (14, 15) dans une position de montage ou de démontage de l'adaptateur de raclette d'essuie-glace (55 ; 55a).

4. Bras d'essuie-glace selon l'une quelconque des revendications 1 à 3,
**caractérisé en ce que**
la sortie (77) et/ou le connecteur enfichable (78) sont alignés avec la direction d'actionnement (66) de l'élément de fixation (65 ; 65a).

5. Bras d'essuie-glace selon la revendication 3 ou 4, **caractérisé en ce que**
l'élément adaptateur (75) comprend, sur le côté tourné vers la paroi latérale (12), respectivement un ergot de retenue (81) qui pénètre dans une ouverture de retenue (21), présentant une section transversale fermée, de la paroi latérale (12).

6. Raclette d'essuie-glace (50) destinée à être fixée à un bras d'essuie-glace (10) selon l'une quelconque des revendications 1 à 5, comprenant un adaptateur de raclette d'essuie-glace (55 ; 55a) constitué de plusieurs éléments d'adaptateur de raclette d'essuie-glace (56 ; 56a, 57 ; 57a, 58), lequel adaptateur de raclette d'essuie-glace est conçu pour être reçu dans le bras d'essuie-glace (10), la direction de montage ou de démontage (18) de l'adaptateur de raclette d'essuie-glace (55 ; 55a) sur le bras d'essuie-glace (10) ou à partir de celui-ci s'étendant sensiblement perpendiculairement à l'axe longitudinal de raclette d'essuie-glace,
**caractérisée en ce**
**qu'**une entrée (82) servant à l'acheminement d'un liquide de lavage et/ou un élément de connexion (83) servant à l'alimentation électrique sont réalisés sur le premier élément d'adaptateur de raclette d'essuie-glace (56 ; 56a) de l'adaptateur de raclette d'essuie-glace (55 ; 55a), et **en ce que** l'entrée (82) et/ou l'élément de connexion (83) sont orientés perpendiculairement à la direction de montage ou de démontage (18) de l'adaptateur de raclette d'essuie-glace (55 ; 55a) sur le bras d'essuie-glace (10).

7. Raclette d'essuie-glace selon la revendication 6, **caractérisée en ce que**
l'adaptateur de raclette d'essuie-glace (55 ; 55a) comprend au moins trois éléments d'adaptateur de raclette d'essuie-glace (56 ; 56a, 57 ; 57a, 58), à savoir le premier élément d'adaptateur de raclette d'essuie-glace (56 ; 56a) qui est conçu pour être relié à un élément adaptateur (75) sur le bras d'essuie-glace (10), un deuxième élément d'adaptateur de raclette d'essuie-glace (57 ; 57a), sur les parois latérales duquel sont formés des prolongements (61, 62) destinés à être insérés dans des ouvertures de réception (14, 15) d'un bras d'essuie-glace (10), et un troisième élément d'adaptateur de raclette d'essuie-glace (58) qui est relié à un corps de raclette d'essuie-glace (52).

8. Raclette d'essuie-glace selon la revendication 7, **caractérisée en ce que**
le deuxième et le troisième élément d'adaptateur de raclette d'essuie-glace (57 ; 57a, 58) sont disposés de manière pivotante l'un par rapport à l'autre, et **en ce que** le premier élément d'adaptateur de raclette d'essuie-glace (56 ; 56a) est disposé de manière pivotante par rapport au troisième élément d'adaptateur de raclette d'essuie-glace (58) et de manière mobile en translation par rapport au deuxième élément d'adaptateur de raclette d'essuie-glace (57 ; 57a).

9. Raclette d'essuie-glace selon la revendication 8, **caractérisée en ce que**
le premier élément d'adaptateur de raclette d'essuie-glace (56) comprend des premiers prolongements (87 ; 87a) qui, pour réaliser l'aptitude au pivotement entre le premier et le troisième élément d'adaptateur de raclette d'essuie-glace (56, 58), viennent en prise dans des évidements du troisième élément d'adaptateur de raclette d'essuie-glace (58).

10. Raclette d'essuie-glace selon la revendication 9, **caractérisée en ce que**
les premiers prolongements (87a) forment une butée servant à limiter l'angle de pivotement entre le premier et le troisième élément d'adaptateur de raclette d'essuie-glace (56, 58).

11. Raclette d'essuie-glace selon l'une quelconque des revendications 8 à 10,
**caractérisée en ce que**
des deuxièmes prolongements (88) ou des nervures de retenue (112) sont formés sur le premier élément d'adaptateur de raclette d'essuie-glace (56 ; 56a), lesquels viennent en prise dans un guide ou dans une ouverture de réception (113) en forme de fente pour réaliser le mouvement de translation entre le premier et le deuxième élément d'adaptateur de raclette d'essuie-glace (56 ; 56a, 57 ; 57a).

12. Raclette d'essuie-glace selon l'une quelconque des revendications 8 à 11,
**caractérisée en ce que**
des troisièmes prolongements (94) de préférence cylindriques sont formés sur le troisième élément d'adaptateur de raclette d'essuie-glace (58), lesquels viennent en prise dans des ouvertures de retenue (95) pour réaliser une liaison par encliquetage dans une position de montage ou de démontage de l'adaptateur de raclette d'essuie-glace (55 ; 55a), lesquelles ouvertures de retenue sont formées sur le deuxième élément d'adaptateur de raclette d'essuie-glace (58).

13. Raclette d'essuie-glace selon l'une quelconque des revendications 8 à 11,
**caractérisée en ce que**
des quatrièmes prolongements (96 ; 96a) de préférence cylindriques sont formés sur le premier élément d'adaptateur de raclette d'essuie-glace (56 ; 56a), lesquels coopèrent avec des ouvertures de retenue (97 ; 97a) formées sur le troisième élément d'adaptateur de raclette d'essuie-glace (58) au moins pour limiter le mouvement de translation du premier élément d'adaptateur de raclette d'essuie-glace (56 ; 56a).

14. Dispositif d'essuyage (100) servant à nettoyer des vitres de véhicule, comportant un bras d'essuie-glace (10) selon l'une quelconque des revendications 1 à 5 et une raclettes d'essuie-glace (50) selon l'une quelconque des revendications 6 à 13.
